# EUROPÄISCHE PATENTSCHRIFT

(11) **EP 0 796 751 B1**
(45) Veröffentlichungstag und Bekanntmachung des Hinweises auf die Patenterteilung: **05.12.2001**
(21) Anmeldenummer: 97102239.7
(22) Anmeldetag: 13.02.1997
(51) Int. Cl.: B60H 1/00

(54) **Klimatisierungseinrichtung**
Air conditioning device
Dispositif de climatisation

(30) Priorität: 23.03.1996 DE 19611570
(43) Veröffentlichungstag der Anmeldung: 24.09.1997
(73) Patentinhaber: GKR Gesellschaft für Fahrzeugklimaregelung mbH, 71229 Leonberg (DE)
(72) Erfinder: Kreft, Wolfgang, 76467 Bietigheim/Baden (DE); Weible, Reinhold, 70437 Stuttgart (DE); Seyfang, Bernd, 74379 Ingersheim (DE); Richter, Florian, 70435 Stuttgart (DE)

(56) Entgegenhaltungen:
- EP-A- 0 109 503
- WO-A-92/05044
- DE-A- 3 926 638
- DE-C- 4 142 648

## Beschreibung

### Stand der Technik

Die Erfindung bezieht sich auf eine Klimatisierungseinrichtung, insbesondere für den Innenraum eines Kraftfahrzeugs, mit einer einen Innentemperaturfühler aufweisenden Regelungs- oder Steuerungseinrichtung, der in einem Strömungsweg der Innenluft angeordnet ist, mit einer Erfassungseinrichtung zum Feststellen eines Ausfalls oder Abfalls der Strömung unter einen vorgegebenen Wert und mit einer Auswerteeinrichtung, mit der ein erfaßtes Signal verarbeitbar ist.

Eine Klimatisierungseinrichtung dieser Art ist in der DE 40 40 847 C2 erwähnt. Bei einer solchen Klimatisierungseinrichtung ist im Temperaturregelkreis ein Innentemperaturfühler vorgesehen, der beispielsweise in einem Kanal eines Armaturenbretts hinter einem Gitter eingebaut ist. Der Innentemperaturfühler soll die Innentemperatur des Kraftfahrzeugs möglichst gut repräsentieren. Hierzu wird beispielsweise mittels eines eigens dafür vorgesehenen, in der Regel kleinen Lüftermotors Luft des Innenraums durch den Strömungskanal gesaugt, um den Innentemperaturfühler zu umströmen. Fällt die Strömung aus, so folgt die von dem Innentemperaturfühler erfaßte Temperatur nicht mehr zuverlässig der tatsächlichen Innentemperatur, so daß die Temperaturregelung nicht mehr zufriedenstellend funktioniert. In der DE 40 40 847 C2 ist daher vorgeschlagen, Betriebsparameter des Motors zu erfassen, um auf die Strömung rückzuschließen. Aufgrund dieser indirekten Meßmethode kann es aber immer noch zu Fehldiagnosen über die Strömung geben. Außerdem ist diese Methode kaum geeignet, wenn kein separater Lüftermotor für den Innentemperaturfühler vorgesehen ist.

### Vorteile der Erfindung

Der Erfindung liegt die Aufgabe zugrunde, eine Klimatisierungseinrichtung der eingangs genannten Art bereitzustellen, bei der mit einfachen Mitteln genau feststellbar ist, ob der Innentemperaturfühler auf das Temperaturniveau der Innenraumluft gebracht ist.

Diese Aufgabe wird mit den im Patentanspruch 1 angegebenen Merkmalen gelöst. Hiernach ist also vorgesehen, daß die Erfassungseinrichtung einen Strömungsdetektor aufweist, der im Strömungsweg oder in einer an diesen angrenzenden Gehäusewandung angeordnet ist. Auf diese Weise wird unmittelbar in der Umgebung des Innentemperaturfühlers dessen Umströmung mit Innenraumluft überwacht. Bei einem Ausfall der Strömung kann dann die Regeleinrichtung entsprechend gesteuert bzw. der Fehler angezeigt werden.

Eine vorteilhafte Ausführungsform, die einen einfachen Aufbau ergibt, besteht darin, daß als Strömungsdetektor der vorhandene Innentemperaturfühler herangezogen ist. Dabei ist die Ausgestaltung z.B. derart, daß die Diagnose über einen Ausfall oder einen übermäßigen Abfall der Strömung anhand der Änderungsgeschwindigkeit des Wertes an dem Innentemperaturfühler bei vorhandenen Diagnosebedinungen durchgeführt wird. Eine geeignete Maßnahme sieht vor, daß zur Auswertung eines Ausfalls oder Abfalls der Strömung eine empirisch ermittelte Systemschwelle herangezogen ist.

Ist vorgesehen, daß der Strömungsdetektor als Diagnosetemperaturfühler ausgebildet und gegenüber der Strömung teilweise oder vollkommen abgeschirmt oder zusätzlich geheizt oder gekühlt ist, so ist der Aufbau des Strömungsdetektors einfach, wobei aus den unterschiedlichen Temperaturverläufen des Innentemperaturfühlers und des Diagnosetemperaturfühlers auf eine fehlende oder ungenügende Strömung und damit ungenaue Temperaturerfassung des Innentemperaturfühlers geschlossen werden kann.

Hierbei ist vorteilhafterweise vorgesehen, daß das Signal des Diagnosetemperaturfühlers während einer Aufheiz- oder Abkühlphase des Innenraums erfaßt ist, daß das zu mindestens einem Zeitpunkt erfaßte Signal des Diagnosetemperaturfühlers in der Auswerteeinrichtung mit einem zur entsprechenden Zeit erfaßten Signal des Innentemperaturfühlers verrechenbar ist und daß aufgrund des Rechenergebnisses der Ausfall oder Abfall der Strömung unter einen vorgegebenen Wert feststellbar ist. Die Aufheiz- oder Abkühlphase kann dabei entweder bei einer anfänglichen Inbetriebnahme der Klimatisierungseinrichtung vorliegen oder bei einer neuen Sollwerteinstellung durch den Fahrer bedingt sein. Bei ungehindert umströmtem Innentemperaturfühler nimmt dieser den Wert der sich ändernden Innentemperatur relativ schnell an und erreicht ebenfalls relativ schnell den Sollwert. Hingegen nimmt der nicht oder kaum umströmte bzw. zusätzlich geheizte oder gekühlte Diagnosetemperaturfühler die Sollwerttemperatur wesentlich langsamer an, da beispielsweise die Gehäusewandung, in der der Diagnosetemperaturfühler aufgenommen ist, oder die nicht umströmte Umgebung des Diagnosetemperaturfühlers sich erst allmählich aufwärmt bzw. abkühlt. Bei Strömungsausfall oder- abschwächung hingegen nimmt auch der Innentemperaturfühler die neue Temperatur entsprechend dem Diagnosetemperaturfühler nur verzögert an. Die unterschiedlichen zeitlichen Temperaturverläufe während der Aufheiz- oder Abkühlphase können daher in der Auswerteeinrichtung dazu herangezogen werden, um eine ausgefallene oder abgeschwächte Strömung zu diagnostizieren.

Beispielsweise kann der Ausfall oder übermäßige Abfall der Strömung dadurch festgestellt werden, daß mittels der Auswerteeinrichtung die Differenz zwischen dem erfaßten Signal des Innentemperaturfühlers und dem erfaßten Signal des Diagnosetemperaturfühlers berechenbar ist und daß der Ausfall oder übermäßige Abfall der Strömung daraus bestimmbar ist, daß der Betrag der Differenz eine fest vorgegebene oder vorgebbare Schwelle unterschreitet.

Eine weitere Möglichkeit, eine fehlerhafte Strömung zu erfassen, besteht darin, daß das Signal des Diagnosetemperaturfühlers und das Signal des Innentemperaturfühlers mittels der Auswerteeinrichtung nach der Zeit differenzierbar sind und daß die Differenz der Ableitungen errechenbar und der Ausfall oder übermäßige Abfall der Strömung daraus bestimmbar ist, daß der Betrag der Differenz eine fest vorgegebene oder vorgebbare Schwelle unterschreitet. Die zeitliche Ableitung der beiden Signale kann dabei auf einfache Weise dadurch gebildet werden, daß während der Aufheiz- oder Abkühlphase in zwei verschiedenen Zeitpunkten jeweils ein Meßwert des Signals des Diagnosetemperaturfühlers und des Signals des Innentemperaturfühlers erfaßt werden und daraus die jeweiligen Differenzenquotienten gebildet werden.

Die Strömung kann außer mit einem separaten Lüftermotor alternativ auch mit einer Luftstrahlpumpe erzeugt werden, indem diese an einen ohnehin vorhandenen Gebläsemotor der Klimatisierungseinrichtung angeschlossen und mit dem Strömungskanal, in dem sich der Innentemperaturfühler befindet, an einer stromab von dem Innentemperaturfühler liegenden Stelle verbunden wird.

Der Strömungsdetektor kann alternativ auch als Anemometer ausgebildet sein.

Die Erfindung wird nachfolgend anhand von Ausführungsbeispielen unter Bezugnahme auf die Zeichnungen näher erläutert. Es zeigen:
- Fig. 1: einen in einem Gehäuse ausgebildeten Strömungskanal mit einem Innentemperaturfühler und einem Diagnosetemperaturfühler,
- Fig. 2A: Temperaturverläufe über der Zeit an dem Innentemperaturfühler und dem Diagnosetemperaturfühler,
- Fig. 2B: einen Temperaturverlauf an dem Innentemperaturfühler mit Angabe von Meßpunkten sowie eine Schwelle und
- Fig.3A bis 3C: verschiedene Anordnungen des Diagnosetemperaturfühlers.

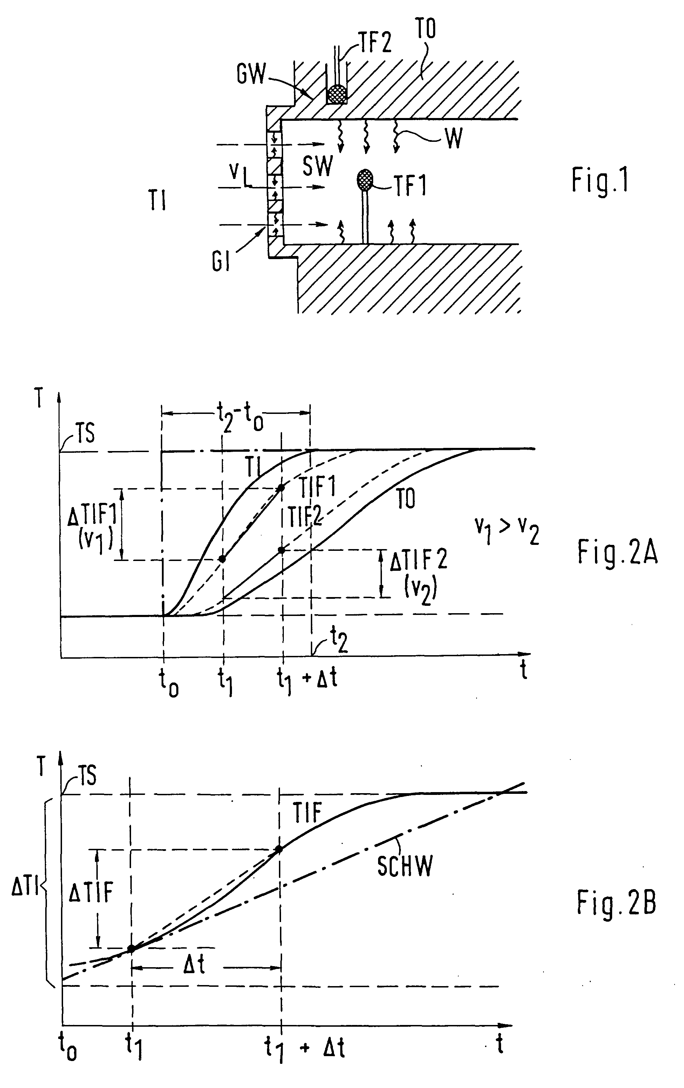

Gemäß Fig. 1 ist ein Fahrzeuginnenraum mittels eines Gitters GI von einem Strömungskanal getrennt, in dem ein Innentemperaturfühler TF1 angeordnet ist. In dem Fahrzeuginnenraum herrscht eine Innentemperatur TI. In einer Gehäusewandung GW, die den Strömungskanal umgibt, ist nahe dem Strömungskanal ein Strömungsfühler in Form eines Diagnosetemperaturfühlers TF2 in einer Aussparung von dem Strömungskanal isoliert angeordnet. Die Gehäusewandüng GW besitzt eine Oberflächentemperatur TO, die in einem stationären Zustand im wesentlichen der Innentemperatur TI entspricht. Die Innenraumluft mit der Innentemperatur TI wird durch das Gitter GI über einen Strömungsweg SW mit einer Strömungsgeschwindigkeit v_{L} durch den Strömungskanal gesaugt, wozu beispielsweise ein separter Lüftermotor oder eine Luftstrahlpumpe verwendet wird. Die Luftstrahlpumpe ist dabei beispielsweise an einen ohnehin vorhandenen Gebläsemotor angeschlossen und/oder kann auch auf einen entsprechenden Fahrtwind ansprechen. Das andere Ende der Luftstrahlpumpe mündet in dem Strömungskanal stromab von dem Innentemperaturfühler TF1. Von der Gehäusewandung GW findet ein Wärmetransport W in den Innenraum des Strömungskanals statt, der bei bekannter Strömungsgeschwindigkeit anhand des Fühlers TF2 rechnerisch kompensierbar ist. Dabei kann TF2 ein vorhandener Oberflächenfühler sein.

In Fig. 2A sind verschiedene Verläufe der Temperatur T über der Zeit t dargestellt. Zu einem Umschaltzeitpunkt t₀ wird ein Sollwert der Temperatur von dem Benutzer auf einen neuen Sollwert TS eingestellt, wie mit der strichpunktierten Linie dargestellt. Dadurch steigt auch die Innentemperatur TI im Fahrgastraum allmählich auf die neue Solltemperatur TS an und erreicht diesen zu einem Zeitpunkt t₂.

Verzögert zum Anstieg der Innentemperatur TI steigt auch die Oberflächentemperatur TO der Gehäusewandung GW an. Bei normaler Strömung durch den Strömungskanal ändert sich auch die Temperatur an dem Innentemperaturfühler TF1 in etwa entsprechend der Innentemperatur TI, wie die obere der beiden gestrichelten Kurven zeigt. Der geringe Unterschied kann beispielsweise von dem Einfluß des Gitters oder anderen Systemparamtern herrühren, beispielsweise auch von der Trägheit des Innentemperaturfühlers TF1 selbst. Der Signalverlauf des Innentemperaturfühlers TF1 ist insbesondere abhängig von der Strömungsgeschwindigkeit in dem Strömungskanal, wie die beiden unterschiedlichen (gestrichelt gezeichneten) Signalverläufe für zwei verschiedene Strömungsgeschwindigkeiten v₁ und v₂ zeigen, wobei v₁ > v₂ ist. Dadurch ergeben sich zwischen den beiden Meßzeitpunkten t₁ und t₁ + Δt unterschiedliche Temperaturdifferenzen des Innentemperaturfühlers ΔTIF1 bzw. ΔTIF2.

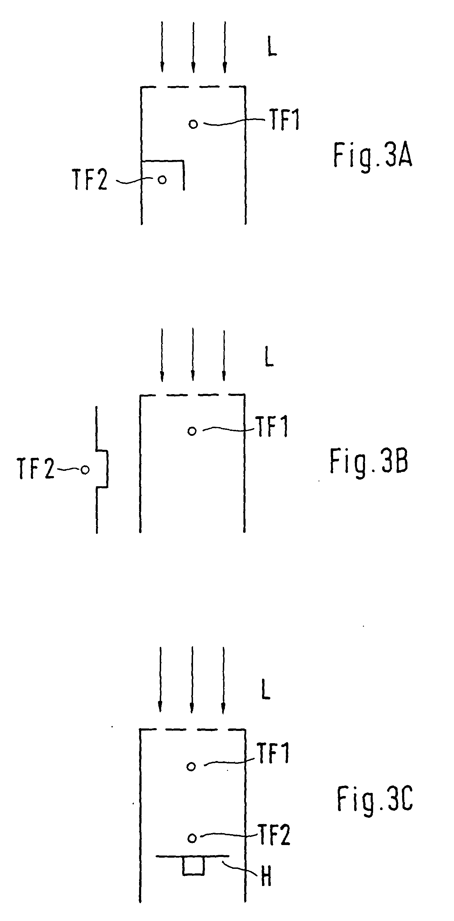

Da der Diagnosetemperaturfühler TF2 in der Gehäusewandung GW aufgenommen ist, zeigt dieser ein Signal des Temperaturverlaufs, das in etwa demjenigen der Oberflächentemperatur TO entspricht. Ist dabei der Diagnosetemperaturfühler TF2 der vorhandene Oberflächentemperaturfühler, so ist kein zusätzlicher Diagnosetemperaturfühler erforderlich. Ähnlich nahe bei dem Verlauf der Oberflächentemperatur TO liegt auch das Signal des Diagnosetemperaturfühlers TF2, wenn dieser zwar im Strömungskanal angeordnet ist, jedoch gegenüber der Strömung abgeschirmt ist, wie z.B. in Fig. 3A gezeigt.

In Fig. 2B ist ein weiterer Signalverlauf des Innentemperaturfühlers für den Fall gezeigt, daß zu einem Zeitpunkt t₀ die Solltemperatur TS umgestellt wird. Während der Zeitdauer △t ändert sich die Temperatur des Innentemperaturfühlers TF1 um ΔTIF. Diese liegt oberhalb einer ebenfalls eingezeichneten Schwelle SCHW . Die Schwelle SCHW ist ebenfalls systembedingt und kann entsprechend vorgegeben werden. Wird die Schwelle SCHW unterschritten, so kann daraus auf eine ungenügende Durchströmung des Strömungskanals geschlossen werden, insbesondere, wenn auch das Signal des Diagnosetemperaturfühlers TF2 herangezogen wird.

In den Figuren 3A bis 3C sind drei verschiedene Möglichkeiten zur Anordnung des Diagnosetemperaturfühlers TF2 schematisch wiedergegeben. Gemäß Fig. 3A liegt der Diagnosetemperaturfühler TF2 im Strömungskanal, ist jedoch gegenüber der Luftströmung L der Innenraumluft abgeschirmt, so daß der Signalverlauf bei einer Änderung der Solltemperatur TS um △TI bzw. bei einer Aufheiz- oder Abkühlphase wesentlich flacher verläuft als das Signal des in der Strömung befindlichen Innentemperaturfühlers TF1. Ein ähnlicher Signalverlauf wie gemäß Fig. 3A ergibt sich auch für eine Anordnung des Diagnosetemperaturfühlers TF2 gemäß Fig. 3B, wo eine Anordnung in der Gehäusewandung GW gezeigt ist. Die Figur 3C zeigt eine Anordnung des Diagnosetemperaturfühlers TF2 in der Nähe eines Heizelements H. Der Diagnosetemperaturfühler TF2 wird von dem Heizelement H aufgewärmt und wird trotz Anordnung im Strömungskanal von der ihn umströmenden Innenraumluft L langsamer in Richtung der Solltemperatur S gebracht als der weiter von dem Heizelement H entfernte Innentemperaturfühler TF1. Fällt hingegen die Strömung aus oder ist sie wesentlich abgeschwächt, so ist kaum ein Unterschied des Signals des Innentemperaturfühlers TF1 und des Diagnosetemperaturfühlers TF2 feststellbar, so daß daraus ein Fehler der Luftströmung in dem Strömungskanal festgestellt werden kann.

Zum Feststellen einer nicht ausreichenden bzw. fehlenden Strömung in dem Luftführungskanal kann beispielsweise gemäß Fig. 2A zu einem Zeitpunkt t₁ zwischen dem Umschaltzeitpunkt t₀ und dem Erreichen der neuen Solltemperatur TS zum Zeitpunkt t₂ die Differenz zwischen dem Signal des Innentemperaturfühlers TF1 und des Diagnosetemperaturfühlers TF2 gebildet wird. Liegt diese Differenz unterhalb einem vorgegebenen oder vorgebbaren Schwellenwert, so bedeutet dies, daß eine ungenügende Strömung vorhanden ist. Um eine entsprechende Aussage auch während einer Abkühlphase machen zu können, wird für die Beurteilung der Betrag der entsprechenden Differenz zugrundegelegt.

Eine weitere Möglichkeit für die Auswertung besteht darin, daß beispielsweise die Steigung des Signalverlaufs an dem Innentemperaturfühler TF1 und an dem Diagnosetemperaturfühler TF2 festgestellt wird, indem entsprechende Meßwerte in zwei aufeinanderfolgenden Zeitpunkten t₁ und t₁ + △t erfaßt werden. Der Betrag der Differenz dieser beiden Ableitungen der Signalverläufe wird auch hier mit einem vorgegebenen bzw. vorgebbaren Schwellenwert verglichen, und bei Unterschreitung wird eine mangelnde Strömung festgestellt.

Für die Diagnose können weiterhin folgende Bedingungen herangezogen werden: Die Änderungen der Signale des Innentemperaturfühlers TF1 und des Diagnosetemperaturfühlers TF2 müssen gleichsinnig sein; in dem Meßzeitpunkt muß die Änderung des Signals des Innentemperaturfühlers TF1 im Betrag mindestens gleich der Änderung des Signals des Diagnosetemperaturfühlers TF2 sein; die Differenz zwischen der Solltemperatur und der Isttemperatur der Innenraumluft muß ausreichend sein; die Grundvoraussetzungen für die Entstehung der Lufströmung müssen erfüllt sein.

Mit den beschriebenen Maßnahmen ist mit einfachen Mitteln eine zuverlässige Diagnose für die Umströmung des Innentemperaturfühlers gewährleistet, so daß eine sichere Basis für die Temperaturregelung bzw.- steuerung gegeben ist.

## Patentansprüche

1. Klimatisierungseinrichtung, insbesondere für den Innenraum eines Kraftfahrzeugs, mit einer einen Innentemperaturfühler (TF1) aufweisenden Regelungs- oder Steuerungseinrichtung, der in einem Strömungsweg der Innenluft angeordnet ist, mit einer Erfassungseinrichtung zum Feststellen eines Ausfalls oder Abfalls der Strömung unter einen vorgegebenen Wert und mit einer Auswerteeinrichtung, mit der ein erfaßtes Signal verarbeitbar ist,
**dadurch gekennzeichnet,**
**daß** die Erfassungseinrichtung einen Strömungsdetektor (TF2) aufweist, der im Strömungsweg (SW) oder in einer an diesen angrenzenden Gehäusewandung (GW) angeordnet ist.

2. Klimatisierungseinrichtung nach Anspruch 1,
**dadurch gekennzeichnet,**
**daß** als Strömungsdetektor der vorhandene Innentemperaturfühler (TF1) herangezogen ist.

3. Klimatisierungseinrichtung nach Anspruch 2,
**dadurch gekennzeichnet,**
**daß** die Diagnose über einen Ausfall oder einen übermäßigen Abfall der Strömung anhand der Änderungsgeschwindigkeit des Wertes an dem Innentemperaturfühler (TF1) bei vorhandenen Diagnosebedinungen durchgeführt wird.

4. Klimatisierungseinrichtung nach Anspruch 3,
**dadurch gekennzeichnet,**
**daß** zur Auswertung eines Ausfalls oder Abfalls der Strömung eine empirisch ermittelte Systemschwelle herangezogen ist.

5. Klimatisierungseinrichtung nach Anspruch 1,
**dadurch gekennzeichnet,**
**daß** der Strömungsdetektor als Diagnosetemperaturfühler (TF2) ausgebildet und gegenüber der Strömung teilweise oder vollkommen abgeschirmt oder zusätzlich geheizt oder gekühlt ist.

6. Klimatisierungseinrichtung nach Anspruch 5,
**dadurch gekennzeichnet,**
**daß** als Diagnosetemperaturfühler (TF2) ein in der Klimatisierungseinrichtung vorhandener Oberflächenfühler herangezogen ist.

7. Klimatisierungseinrichtung nach Anspruch 5 oder 6,
**dadurch gekennzeichnet,**
**daß** das Signal des Diagnosetemperaturfühlers (TF2) während einer Aufheiz- oder Abkühlphase (t₂-t₀) des Innenraums erfaßt ist,
**daß** das zu mindestens einem Zeitpunkt (t₁, t₁ + Δt) erfaßte Signal des Diagnosetemperaturfühlers (TF2) in der Auswerteeinrichtung mit einem zur entsprechenden Zeit erfaßten Signal des Innentemperaturfühlers (TF1) verrechenbar ist und
**daß** aufgrund des Rechenergebnisses der Ausfall oder Abfall der Strömung unter einen vorgegebenen Wert feststellbar ist.

8. Klimatisierungseinrichtung nach Anspruch 7,
**dadurch gekennzeichnet,**
**daß** mittels der Auswerteeinrichtung die Differenz zwischen dem erfaßten Signal des Innentemperaturfühlers (TF1) und dem erfaßten Signal des Diagnosetemperaturfühlers (TF2) berechenbar ist und
**daß** der Ausfall oder übermäßige Abfall der Strömung daraus bestimmbar ist, daß der Betrag der Differenz eine fest vorgegebene oder vorgebbare Schwelle (SCHW) unterschreitet.

9. Klimatisierungseinrichtung nach Anspruch 7,
**dadurch gekennzeichnet,**
**daß** das Signal des Diagnosetemperaturfühlers (TF2) und das Signal des Innentemperaturfühlers (TF1) mittels der Auswerteeinrichtung nach der Zeit differenzierbar sind und
**daß** die Differenz der Ableitungen errechenbar und der Ausfall oder übermäßige Abfall der Strömung daraus bestimmbar ist, daß der Betrag der Differenz eine fest vorgegebene oder vorgebbare Schwelle unterschreitet.

10. Klimatisierungseinrichtung nach einem der vorhergehenden Ansprüche,
**dadurch**
**gekennzeichnet,**
**daß** zur Erzeugung der Strömung ein separater Lüftermotor oder eine Luftstrahlpumpe vorgesehen ist.

11. Klimatisierungseinrichtung nach einem der vorhergehenden Ansprüche,
**dadurch gekennzeichnet,**
**daß** der Strömungsdetektor als Anemometer ausgebildet ist.

## Claims

1. Air-conditioning device, in particular for the interior of a motor vehicle, with a closed-loop or open-loop control device having an interior temperature sensor (TF1) which is arranged in a flow path of the interior air, having a sensing device for detecting a failure of or a reduction in the flow below a predefined value, and having an evaluation device with which a sensed signal can be processed, **characterized in that** the sensing device has a flow detector (TF2) which is arranged in the flow path (SW) or in a housing wall (GW) adjoining the latter.

2. Air-conditioning device according to Claim 1, **characterized in that** the internal temperature sensor (TF1) which is present is used as a flow detector.

3. Air-conditioning device according to Claim 2, **characterized in that** the diagnostics relating to a failure of or an excessive reduction in the flow are carried out by reference to the rate of change of the value at the internal temperature sensor (TF1) under the prevailing diagnostic conditions.

4. Air-conditioning device according to Claim 3, **characterized in that** an empirically determined system threshold is used to evaluate a failure of or reduction in the flow.

5. Air-conditioning device according to Claim 1, **characterized in that** the flow detector is embodied as a diagnostic temperature sensor (TF2) and with respect to the flow is partially or completely screened or additionally heated or cooled.

6. Air-conditioning device according to Claim 5, **characterized in that** a surface sensor which is present in the air-conditioning device is used as a diagnostic temperature sensor (TF2).

7. Air-conditioning device according to Claim 5 or 6, **characterized in that** the signal of the diagnostic temperature sensor (TF2) is sensed during a heating or cooling phase (t₂-t₀) of the interior, **in that** the signal, sensed at at least one time (t₁, t₁ + △t), of the diagnostic temperature sensor (TF2) can be calculated in the evaluation device with a signal, sensed at the corresponding time, of the internal temperature sensor (TF1), and **in that** the failure of or reduction in the flow below a predefined value can be detected on the basis of the computational result.

8. Air-conditioning device according to Claim 7, **characterized in that** the difference between the sensed signal of the internal temperature sensor (TF1) and the sensed signal of the diagnostic temperature sensor (TF2) can be calculated by means of the evaluation device, and **in that** the failure of or excessive reduction in the flow can be determined from the fact that the absolute value of the difference drops below a permanently predefined or predefinable threshold (SCHW).

9. Air-conditioning device according to Claim 7, **characterized in that** the signal of the diagnostic temperature sensor (TF2) and the signal of the internal temperature sensor (TF1) can be differentiated according to time by means of the evaluation device, and **in that** the difference between the derivations can be calculated and the failure of or excessive reduction in the flow can be determined from the fact that the absolute value of the difference drops below a permanently predefined or predefinable threshold.

10. Air-conditioning device according to one of the preceding claims, **characterized in that** a separate fan motor or an air jet pump is provided to produce the flow.

11. Air-conditioning device according to one of the preceding claims, **characterized in that** the flow detector is embodied as an anemometer.

## Revendications

1. Dispositif de climatisation, notamment pour l'habitacle d'un véhicule automobile, comprenant un dispositif de commande et de régulation équipé d'une sonde de température interne (TF1) placée sur le parcours d'un écoulement d'air intérieur, un dispositif de détection de l'absence ou d'une chute de l'écoulement en dessous d'une valeur donnée et un dispositif d'exploitation permettant d'exploiter le signal perçu,
**caractérisé en ce que**
le dispositif de détection comporte un détecteur d'écoulement (TF2) situé sur le parcours de l'écoulement (SW) ou dans une paroi du boîtier (GW) délimitant cet écoulement.

2. Dispositif de climatisation selon la revendication 1,
**caractérisé en ce qu'**
il utilise comme détecteur d'écoulement la sonde de température interne existante (TF1).

3. Dispositif de climatisation selon la revendication 2,
**caractérisé en ce que**
le diagnostic d'une disparition ou d'une chute excessive de l'écoulement est effectué à partir de la vitesse de variation de la valeur indiquée par la sonde de température interne (TF1), dans les conditions de diagnostic existantes.

4. Dispositif de climatisation selon la revendication 3,
**caractérisé en ce que**
pour exploiter une disparition ou une chute de l'écoulement, on utilise un seuil de système déterminé empiriquement.

5. Dispositif de climatisation selon la revendication 1,
**caractérisé en ce que**
le détecteur d'écoulement est constitué par une sonde de température de diagnostic (TF2) abritée de l'écoulement en tout ou en partie par un écran, ou bénéficiant d'un chauffage ou d'un refroidissement supplémentaire.

6. Dispositif de climatisation selon la revendication 5,
**caractérisé en ce qu'**
il utilise comme sonde de température de diagnostic (TF2) une sonde de surface existant dans le dispositif de climatisation.

7. Dispositif de climatisation selon la revendication 6,
**caractérisé en ce que**
le signal de la sonde de température de diagnostic (TF2) est saisi pendant une phase de chauffage ou de refroidissement (t₂-t₀) de l'habitacle, et le signal saisi au moins à un instant (TI, TI + Δt) peut être comparé par le calcul au signal, saisi au même instant, de la sonde de température interne (TF1), le résultat du calcul permettant d'établir que l'écoulement a disparu ou est devenu inférieur à une valeur donnée.

8. Dispositif de climatisation selon la revendication 7,
**caractérisé en ce que**
le dispositif d'exploitation peut calculer la différence entre le signal perçu délivré par la sonde de température interne (TF1) et le signal perçu délivré par la sonde de température de diagnostic (TF2), et la disparition ou la chute de l'écoulement peut-être établie par le fait que le montant de cette différence est inférieur à un seuil (SCHW) donné ou qui peut être donné à l'avance.

9. Dispositif de climatisation selon la revendication 7,
**caractérisé en ce que**
le signal de la sonde de température de diagnostic (TF2) et le signal de la sonde de température interne (TF1) peuvent être dérivés en fonction du temps par le dispositif d'exploitation, et la différence de ces dérivés peut être calculée, l'absence ou la réduction excessive de l'écoulement étant alors établie par le fait que le montant de la différence calculée est inférieur à une valeur de seuil donnée ou pouvant être donnée.

10. Dispositif de climatisation selon l'une quelconque des revendications précédentes,
**caractérisé en ce que**
l'écoulement est produit par un ventilateur séparé ou une pompe à jet d'air.

11. Dispositif de climatisation selon l'une quelconque des revendications précédentes,
**caractérisé en ce que**
le détecteur d'écoulement est un anémomètre.
